# EUROPÄISCHE PATENTSCHRIFT

(11) **EP 2 821 171 B1**
(45) Veröffentlichungstag und Bekanntmachung des Hinweises auf die Patenterteilung: **14.11.2018**
(21) Anmeldenummer: 14163189.5
(22) Anmeldetag: 02.04.2014
(51) Int. Cl.: B23D 45/18, B23D 47/08, B27D 5/00

(54) **Bearbeitungsvorrichtung mit einer Beförderungseinrichtung und Bearbeitungsverfahren**
Processing device with a conveyor device and a processing method
Dispositif de traitement doté d'un système d'alimentation et méthode de traitement

(30) Priorität: 04.07.2013 DE 102013213085
(43) Veröffentlichungstag der Anmeldung: 07.01.2015
(73) Patentinhaber: HOMAG GmbH, 72296 Schopfloch (DE)
(72) Erfinder: Paschwitz, Tino, 72160 Horb (DE)
(74) Vertreter: Hoffmann Eitle

(56) Entgegenhaltungen:
- EP-A1- 2 792 460
- EP-A2- 0 299 155
- EP-A2- 1 964 654
- EP-A2- 2 394 803
- DE-A1- 1 502 732
- DE-A1- 2 903 574
- DE-A1-102009 024 955
- DE-U1-202007 008 554
- FR-A1- 2 314 794
- US-A- 2 505 958
- US-A- 3 130 621
- US-A1- 2010 126 323

## Beschreibung

### Technisches Gebiet

Die Erfindung betrifft eine Bearbeitungsvorrichtung zur spanenden Bearbeitung von Werkstücken, gemäß dem Oberbegriff des Anspruchs 1. Des Weiteren betrifft die Erfindung ein Verfahren zum spanenden Bearbeiten derartiger Werkstücke, gemäß dem Oberbegriff des Anspruchs 5. Eine solche Bearbeitungsvorrichtung und ein solches Verfahren sind aus DE102009024955A1 bekannt.

### Stand der Technik

Bearbeitungsvorrichtungen und Verfahren der eingangsgenannten Art finden beim Kappen von Kantenüberständen an einer Werkstückkante breite Anwendung. Nach Beschichten eines Werkstücks steht meist eine angeleimte Kante an einer Werkstückkante über, die gekappt bzw. abgetrennt werden muss.
Die Werkstücke werden üblicherweise auf einer Beförderungseinrichtung bewegt, bspw. in einer horizontalen Ebene. Dabei wird ein Bearbeitungswerkzeug, wie bspw. ein Sägeblatt, über eine Schrägführung geführt, die entlang der Beförderungseinrichtung verläuft. Zum Kappen der Werkstückkante wird die Säge "von oben" auf die Kante geführt. Während der Bewegung des Werkstücks mit der Beförderungsgeschwindigkeit entlang der Horizontalen und der Bewegung des Bearbeitungswerkzeugs schräg zur Horizontalen erfolgt das Abtrennen der überstehenden Kante.

Bei diesem Verfahren wird ermöglicht, dass das Bearbeitungswerkzeug beim Kappen von oben auf die zu kappende Kante geführt wird und der Kappvorgang von oben nach unten erfolgen kann, sodass die Abtragung von Material immer nur an einer Stelle (hier der obersten) der Schnittlinie, d.h. des zu bearbeitenden Abschnitts, bzw. unterhalb des Bearbeitungswerkzeugs erfolgt. Im Gegensatz dazu wäre eine Abtragung von Material zu sehen, bei der bspw. eine Kreissäge "mittig" auf die Schnittlinie auftrifft und somit an zwei Stellen (oberhalb und unterhalb des Sägeblatts) Material abträgt, die Säge also ein "Loch" in den zu schneidenden Abschnitt "frisst", das nach oben und unten bis zur vollständigen Abtrennung erweitert wird.

Bei diesem Verfahren ist jedoch die Kapp- bzw. Schnittgeschwindigkeit über den Hub mit der Beförderungsgeschwindigkeit der Werkstücke gekoppelt. Folglich ist es bei diesem Verfahren nicht möglich, die Schnittgeschwindigkeit bspw. an die Dicke der zu kappenden Kante, die Kantenstärke bzw. das Kantenmaterial anzupassen. Bei einer besonders dicken Kante müsste zum Beispiel die Beförderungsgeschwindigkeit der Werkstücke reduziert werden, um den Schnitt von oben nach unten ausreichend "langsam" durchzuführen.

### Darstellung der Erfindung

Es ist Aufgabe der vorliegenden Erfindung, bei einfacher Konstruktion eine Bearbeitungsvorrichtung und ein Verfahren zu schaffen, bei der/dem ein Bearbeiten von Werkstücken, insbesondere das Kappen eines Kantenüberstands an einer Werkstückkante, unabhängig von einer Beförderungsgeschwindigkeit erfolgen kann, wobei die Abtragung von Material nur an einer Stelle der Schnittlinie bzw. des zu bearbeitenden Abschnitts des Werkstücks erfolgen kann, insbesondere das Material nur an einer Stelle abgetragen wird.
Diese Aufgabe wird erfindungsgemäß durch die Bearbeitungsvorrichtung mit den Merkmalen von Anspruch 1 gelöst. Demzufolge ist eine Bearbeitungsvorrichtung zur spanenden Bearbeitung von Werkstücken vorgesehen, die bevorzugt zumindest teilweise aus Holz, Holzwerkstoffen, Kunststoff oder dergleichen bestehen, vorzugsweise zum Kappen eines Kantenüberstands an einer Werkstückkante. Die Bearbeitungsvorrichtung weist eine Beförderungseinrichtung zum Befördern der Werkstücke und/oder der Bearbeitungseinrichtung in eine Beförderungsrichtung und die Bearbeitungseinrichtung zur Aufnahme eines Bearbeitungswerkzeugs zur spanenden Bearbeitung des Werkstücks durch eine Schnittbewegung auf, die gemäss der Erfindung einen Exzenter zum Führen einer Vorschubbewegung des Bearbeitungswerkzeugs auf einer kegelschnittförmigen, kreisförmigen oder elliptischen, 360° Bahn in einer Vorschubebene aufweist.
Die Beförderungsrichtung verläuft winklig, insbesondere senkrecht, zu der Vorschubebene, und die Schnittbewegung des Bearbeitungswerkzeugs verläuft in der Vorschubebene oder parallel dazu.
Des Weiteren ist erfindungsgemäß ein Verfahren zum spanenden Bearbeiten von Werkstücken, die bevorzugt zumindest teilweise aus Holz, Holzwerkstoffen, Kunststoff oder dergleichen bestehen, vorzugsweise zum Kappen eines Kantenüberstands an einer Werkstückkante, mit den Merkmalen von Anspruch 5 vorgesehen, das den Schritt von spanendem Bearbeiten des Werkstücks, vorzusgweise während der Beförderung des Werkstücks, durch ein Bearbeitungswerkzeug einer Bearbeitungseinrichtung, mittels der Bearbeitungsvorrichtung gemäß der Erfindung, durch eine Schnittbewegung und den Schritt von Befördern des Werkstücks und/oder der Bearbeitungseinrichtung in eine Beförderungsrichtung umfasst, wobei gemäß der Erfindung das Bearbeitungswerkzeug beim Bearbeiten durch einen Exzenter in einer Vorschubebene winklig, insbesondere senkrecht, zur Beförderungsrichtung auf einer kegelschnittförmigen 360° Bahn, einem Kreis oder einer Ellipse, zum Werkstück hin und vom Werkstück weg bewegt wird und die Schnittbewegung des Bearbeitungswerkzeugs in der Vorschubebene des Exzenters oder parallel dazu verläuft.
Durch den Exzenter, der eine Vorschubbewegung des Bearbeitungswerkzeugs auf einer kegelschnittförmigen Bahn in einer Vorschubebene ermöglicht, die winklig, insbesondere senkrecht, zu der Beförderungsrichtung verläuft, ist es möglich, eine spanende Bearbeitung, insbesondere einen Kappschnitt, unabhängig von der Geschwindigkeit der Beförderung durchzuführen.

Dadurch, dass die Vorschubbewegung erfindungsgemäß auf einer kegelschnittförmigen Bahn erfolgt, kann das Bearbeitungswerkzeug bzw. die Bearbeitungseinrichtung auf einer Seite der Beförderungseinrichtung entlang der Beförderungsrichtung angeordnet sein und auf der kegelschnittförmigen Bahn zum Werkstück hin und vom Werkstück zurück bewegt werden, wobei gleichzeitig eine Bewegung des Bearbeitungswerkzeugs in der Vorschubebene winklig bzw. senkrecht zu der Bewegung zu dem Werkstück hin bzw. zurück erfolgt. Es ist folglich möglich, eine Bewegung zu der unteren Seite einer Werkstückkante durchzuführen, während des Abtragens das Bearbeitungswerkzeug von der unteren Seite zu der oberen Seite der Schnittlinie zu bewegen und das Bearbeitungswerkzeug nach der Bearbeitung von der Oberseite des Werkstücks von dem Werkstück wegzuführen.

Die Richtungskomponente in der Vorschubebene zu dem Werkstück hin und zurück ermöglicht das seitliche Vorbeifahren der Werkstücke bzw. der Bearbeitungseinrichtung auf der Beförderungseinrichtung , und die Bewegung des Bearbeitungswerkzeugs in die Richtung winklig bzw. senkrecht zu der Richtung hin zu dem Werkstück ermöglicht das Abtragen von Material ausgehend von einer Ober- oder Unterseite des Werkstücks.

Die Vorschubgeschwindigkeit des Exzenters wird über den Exzenterantrieb bestimmt und ist unabhängig von der Beförderungsgeschwindigkeit der Beförderungseinrichtung. So sind hohe Beförderungsgeschwindigkeiten bzw. Taktleistungen realisierbar, während sich die Geschwindigkeit der Bearbeitung bzw. des Abtragens von Material durch das Bearbeitungswerkzeug optimal auf das jeweilige Werkstück, bspw. hinsichtlich Werkstückdicke, Kantenstärke, Kantenmaterial usw. anpassen bzw. automatisieren lässt. Dabei ist eine präzise Steuerung des Schnitts möglich, insbesondere der Schnittgeschwindigkeit.

Der Erfindung liegt der Gedanke zugrunde, einen Abschnitt eines Werkstücks spanend zu bearbeiten, wobei die Bearbeitung von einer Seite der Beförderungseinrichtung in Beförderungsrichtung erfolgt und sich das Bearbeitungswerkzeug zum Abtragen von Material zu dem Werkstück hinbewegen muss, wobei, wenn keine spanende Bearbeitung durchgeführt werden soll, sich ein Werkstück und die Bearbeitungseinrichtung nicht behindern bzw. ungehindert relativ zueinander vorbeifahren können. Darüber hinaus ist das Abtragen von Material derart möglich, dass das Material ausgehend von einem Ende der Schnittlinie bzw. des Abschnitts abgetragen wird, sich also von einem Ende zu dem anderen Ende der Schnittlinie "durchfrisst".

Durch den Bewegungsablauf des Exzenters um 360° sind keine Verschleißteile wie Stoßdämpfer oder Drosselventile nötig, die die Zuverlässigkeit und Präzision des Schnitts verringern würden.

Unter der Schnittbewegung ist die Bewegung bei einer Spannabtragung während einer Umdrehung bzw. eines Hubs des Bearbeitungswerkzeugs zu verstehen. Die Schnittbewegung beschreibt dabei die Spanungsbewegung in die Schnittrichtung.

Bei dem Bearbeitungswerkzeug handelt es sich vorzugsweise um eine Säge oder eine Fräse, insbesondere Kreissäge. Bei letzterer verläuft vorzugsweise die Rotationsachse des rotierbaren Sägeblatts in einer Ebene parallel zur Beförderungsrichtung.

Befördern der Werkstücke und/oder der Bearbeitungseinrichtung ist so zu verstehen, dass zumindest die Werkstücke oder die Bearbeitungseinrichtung befördert werden/wird. In einer Ausführungsform werden die Bearbeitungseinrichtung und die Werkstücke zumindest zeitweise gleichzeitig befördert.

Besonders vorteilhafte Weiterbildungen der Erfindung sind in den abhängigen Ansprüchen angegeben, auf die im Folgenden Bezug genommen wird. Vorzugsweise weist die Bearbeitungseinrichtung einen Antrieb, insbesondere einen Servomotor, Schrittmotor oder Gleichstrommotor, vorzugsweise mit einem Planetengetriebe, zum Antreiben des Exzenters auf. Dies ermöglicht eine präzise Ansteuerung des Exzenters bzw. der exzentrischen Bewegung und somit eine präzise spanende Bearbeitung bzw. Abtragung von Material.

Darüber hinaus kann die Bearbeitungseinrichtung einen zusätzlichen, vom Antrieb des Exzenters unabhängigen, Antrieb zum Antreiben des Bearbeitungswerkzeugs aufweisen. Dadurch ist es möglich, die Abtragung von Material optimal an das zu bearbeitende Werkstück anzupassen, und zwar einerseits hinsichtlich der Vorschubbewegung des Exzenters und andererseits, unabhängig davon, hinsichtlich der Schnittbewegung bei der Spanabtragung.

Vorzugsweise ist die Bearbeitungseinrichtung in Beförderungsrichtung entlang der Beförderungseinrichtung verfahrbar angeordnet, sodass ein Werkstück während der Beförderung bei Mitfahren der Bearbeitungseinrichtung bearbeitet werden kann. Das Mitfahren der Bearbeitungseinrichtung kann bspw. über einen Anschlag oder über eine elektrische Kopplung mit den vorbeifahrenden Werkstücken ausgerichtet werden.

Das Bearbeitungswerkzeug bzw. die Bearbeitungseinrichtung kann, zumindest während des Bearbeitens, horizontal neben dem Werkstück mitfahren, wodurch eine kontinuierliche Beförderung der Werkstücke möglich ist. Die Bearbeitungseinrichtung fährt während der Bearbeitung eine gewisse Länge neben dem Werkstück her und wird nach Beenden der Bearbeitung an einem Werkstück wieder in die Ausgangslage zum Bearbeiten des nächsten Werkstücks zurückgefahren.

Des Weiteren ist es vorzuziehen, dass das Werkstück und/oder die Bearbeitungseinrichtung im Wesentlichen horizontal befördert wird und das Bearbeitungswerkzeug beim Bearbeiten in der Vorschubebene von der Unterseite zur Oberseite des zu bearbeitenden Abschnitt des Werkstücks bewegt wird und die Schnittbewegung des Bearbeitungswerkzeugs nach unten gerichtet erfolgt. Wenn das Bearbeitungswerkzeug beim Bearbeiten von der Unterseite zur Oberseite bewegt wird, kann die Schnittbewegung nach unten gerichtet erfolgen, im Falle einer Kreissäge in die gegenläufige Richtung zu der Richtung der Bewegung des Bearbeitungswerkzeugs in der Vorschubebene auf der kegelschnittförmigen Bahn. Durch diese Abtragungsrichtung bekommen Späne oder Kantenreste eine vorteilhafte Flugrichtung, sodass eine Verschmutzung des Werkstücks vermieden werden kann.

Vorzugsweise wird das Bearbeitungswerkzeug auf einer elliptischen Bahn geführt, d.h. die Lagerung des Exzenters ist ellipsenförmig. Dadurch wird das Bearbeitungswerkzeug in dem Werkstück relativ wenig weit zu dem Werkstück hin bzw. über die Kante hinaus bewegt, aber eine relativ starke Vorschubbewegung in die Richtung, in die das Material abgetragen wird, findet statt.

Die Bearbeitungseinrichtung kann zum Übertragen der Vorschubbewegung auf das Bearbeitungswerkzeug ein Übertragungsmittel, insbesondere einen Hebel, aufweisen, dessen eines Ende mit einem Gelenk direkt oder indirekt verbunden ist, das wiederum mit einer Führung, insbesondere eine Linearführung, verbunden ist, und dessen anderes Ende direkt oder indirekt mit der Bearbeitungseinrichtung bzw. dem Bearbeitungswerkzeug verbunden ist.

Weitere Merkmale und Vorteile der Erfindung werden anhand der nachfolgenden ausführlichen Beschreibung noch näher ersichtlich werden.

Bei der im Folgenden beschriebenen Ausführungsform erfolgt die Bearbeitung durch eine Bearbeitungsvorrichtung bzw. - maschine bei Durchlauf der Werkstücke. Die erfindungsgemäße Bearbeitungsvorrichtung kann auch ein Bearbeitungszentrum sein, in dem das Werkstück während der Bearbeitung im Wesentlichen stationär gehalten wird und die Bearbeitungseinrichtung befördert wird.

### Kurze Beschreibung der Zeichnungen

- Fig. 1: zeigt eine schematische Draufsicht einer Bearbeitungsvorrichtung gemäß der vorliegenden Erfindung;
- Fig. 2: zeigt eine schematische Seitenansicht in Beförderungsrichtung einer Bearbeitungsvorrichtung der vorliegenden Erfindung;
- Fig. 3: zeigt eine Seitenansicht einer Bearbeitungseinrichtung in der Bereitstellung;
- Fig. 4: zeigt eine Seitenansicht einer Bearbeitungseinrichtung vor Schnittbeginn;
- Fig. 5: zeigt eine Seitenansicht einer Bearbeitungseinrichtung während des Schnitts; und
- Fig. 6: zeigt eine Seitenansicht einer Bearbeitungseinrichtung nach dem Schnitt;
- Fig. 7: zeigt eine Perspektivansicht der Bearbeitungseinrichtung der vorliegenden Erfindung und
- Fig. 8: zeigt eine weitere Perspektivansicht der Bearbeitungseinrichtung der vorliegenden Erfindung.

### Ausführliche Beschreibung einer bevorzugten Ausführungsform

Eine bevorzugte Ausführungsform der vorliegenden Erfindung wird nachfolgend ausführlich unter Bezugnahme auf die begleitenden Zeichnungen beschrieben.

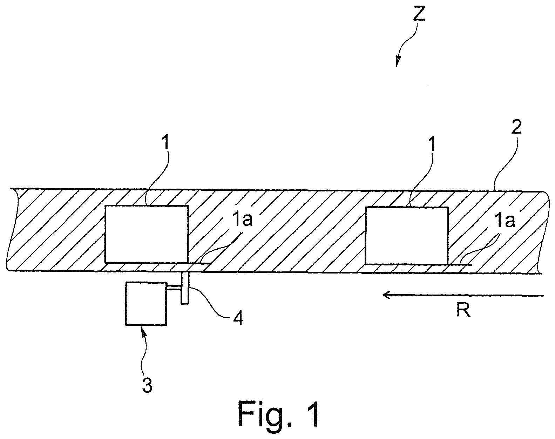

In Fig. 1 ist in einer schematischen Draufsicht eine Bearbeitungsvorrichtung Z zum Kappen eines Kantenüberstands 1a einer Werkstückkante eines Werkstücks 1 gezeigt. Die Werkstücke 1 werden auf einer Beförderungseinrichtung 2, bspw. einem Förderband, in eine Beförderungsrichtung R transportiert. Die Beförderungsrichtung R verläuft horizontal nach links. Des Weiteren weist die Bearbeitungsvorrichtung Z eine Bearbeitungseinrichtung 3 zur Aufnahme eines Bearbeitungswerkzeugs 4 zum Abtragen von Material des Werkstücks durch eine Schnittbewegung auf. Die Bearbeitungseinrichtung 3 ist an der Beförderungseinrichtung 2 angeordnet, und zwar an einer Seite der Beförderungseinrichtung in der Beförderungsrichtung R.

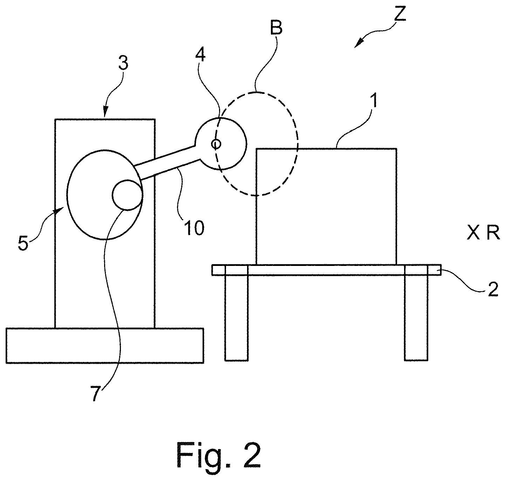

In Fig. 2 ist schematisch eine Seitenansicht der Bearbeitungsvorrichtung von Fig. 1 dargestellt ist. Die Beförderungsrichtung R verläuft in die Zeichenebene hinein und die Vorschubebene V liegt in der Zeichnungsebene. In dieser Ebene kann das Bearbeitungswerkzeug 4 durch den Exzenter 5 auf einer elliptischen Bahn B in der Vorschubebene V geführt werden. Die Bearbeitungseinrichtung 3 weist zum Übertragen der Vorschubbewegung vom Exzenter 5 auf das Bearbeitungswerkzeug 4 ein Übertragungsmittel 10, insbesondere einen Hebel, auf, dessen eines Ende mit dem Gelenk 11 direkt oder indirekt verbunden ist und dessen anderes Ende direkt oder indirekt mit dem Bearbeitungswerkzeug 4 bzw. der Bearbeitungseinrichtung 3 verbunden ist. Zwischen den beiden Enden des Übertragungsmittels 10 ist die Exzenterausnehmung 10a angeordnet.

Das Bearbeitungswerkzeug wird während der Bearbeitung bspw. auf einer elliptischen Bahn B geführt, wie bspw. in Fig. 2 gezeigt.

Die Bearbeitungseinrichtung 3 ist verfahrbar entlang der Beförderungseinrichtung 2 angeordnet, sodass die Bearbeitungseinrichtung 3 in die Beförderungsrichtung R verfahren werden kann und das Bearbeitungswerkzeug 4 während des Bearbeitens neben dem Werkstück 1 mitfahren kann. Die Beförderung und das Mitfahren der Bearbeitungseinrichtung erfolgen in der vorliegenden Ausführungsform horizontal.

Insbesondere wird aus Fig. 2 deutlich, dass die Beförderungsrichtung R senkrecht zu der Vorschubebene V verläuft und die Schnittbewegung des Bearbeitungswerkzeugs 4 in der Vorschubebene V oder parallel zu der Vorschubebene verläuft.

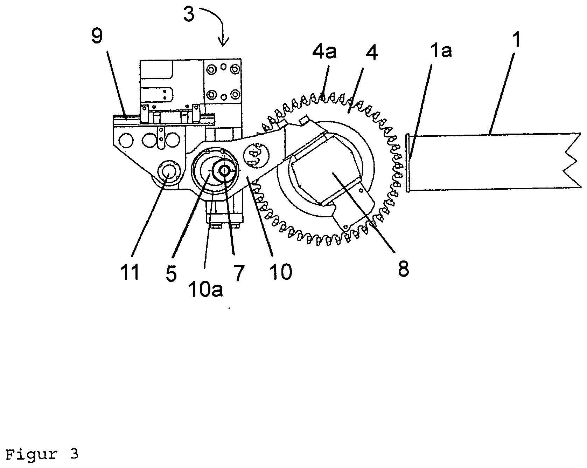

Figuren 3 bis 6 zeigen eine Seitenansicht der Bearbeitungseinrichtung und eines Werkstücks 1. Mit Bezug auf Fig. 3 werden die Komponenten der Bearbeitungseinrichtung 3 in weiteren Einzelheiten beschrieben. Ein Servomotor mit einem Planetengetriebe ist zum Antreiben des Exzenters 5 vorgesehen. Über eine Linearführung bzw. horizontale Schiene 9 und ein Gelenk 11 ist ein Übertragungsmittel (ein Hebel) 10 in der Exzenterausnehmung 10a in dem Exzenter-Drehpunkt 7 gelagert, wodurch die elliptische Bewegung erzeugt werden kann. Es erfolgt eine Bewegung entlang der Schiene 9 und um den festen Drehpunkt 7. Die Lagerung über ein Planetengetriebe mit einem elliptischen Querschnitt führt zu einer elliptischen Bewegungsbahn B des Bearbeitungswerkzeugs 4.

Bei dem Bearbeitungswerkzeug der bevorzugten Ausführungsform handelt es sich um ein rotierendes Sägeblatt. Das Sägeblatt 4 weist Sägezähne 4a auf, die einen Kantenüberstand 1a des Werkstücks 1 schneiden bzw. durch eine Schnittbewegung Material davon abtragen. Die Rotationsrichtung des Sägeblatts erfolgt in der vorliegenden Ausführungsform im Uhrzeigersinn, wie Fig. 3 bis 6 zu entnehmen ist. Somit fliegen Späne und Kantenreste etc. im Wesentlichen nach unten, ohne das Werkstück oder die Umgebung stark zu verschmutzen.

Mit Bezug auf die Figuren 3 bis 6 wird nun der Ablauf des Kappschnitts genauer beschrieben. Die Abtragung des Materials bzw. die Schnittbewegung erfolgt in der Vorschubebene, also von unten nach oben in den Zeichnungen 3 bis 6.

In Fig. 3 befindet sich die Bearbeitungseinrichtung in einer Bereithaltungsposition, an der sie horizontal am Weitesten von dem Werkstück 1 beabstandet ist. Somit kann ein Werkstück auf der Beförderungseinrichtung an der Bearbeitungseinrichtung vorbeifahren.

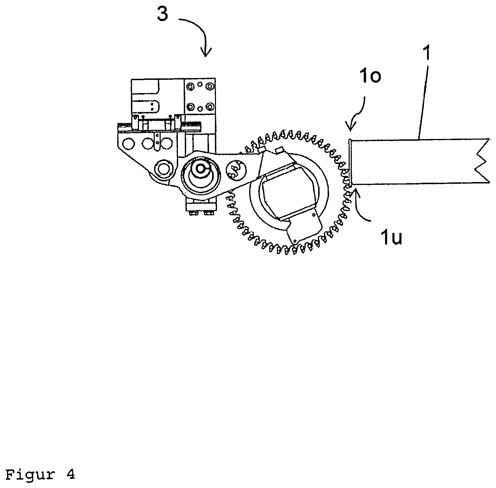

In Fig. 4 ist die Säge 4 in ihrer tiefsten Position gezeigt, die die Säge 4 kurz vor Beginn des Schnitts relativ zu dem Werkstück 1 einnimmt. Somit tritt das Bearbeitungswerkzeug 4 bei Beginn des Schnitts von der Werkstückunterseite 1u in den zu bearbeitenden Abschnitt bzw. die Schnittlinie des Werkstücks 1 ein.

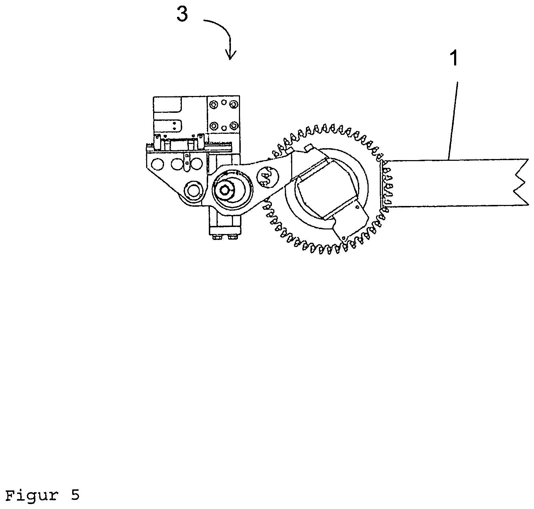

In Fig. 5 ist der Zustand gezeigt, in dem das Bearbeitungswerkzeug 4 maximal zu dem Werkstück 1 hin bewegt ist, während Material abgetragen wird. Durch die Bewegung des Bearbeitungswerkzeugs 4 von der Unterseite 1u zu der Oberseite 1o des zu bearbeitenden Abschnitts erfolgt die Schnittbewegung des Bearbeitungswerkstücks 4 bzw. die Abtragung von Material immer an der Unterseite 1u des momentan zu bearbeitenden Abschnitts. Die Sägezähne 4a fressen folglich von der Unterseite 1u zu der Oberseite 1o des Kantenüberstands 1a Material heraus, wobei Material nur an einer Stelle abgetragen wird, die sich während des Bearbeitens von der Unterseite 1u zu der Oberseite 1o der Werkstückkante 1a auf der Schnittlinie "bewegt".

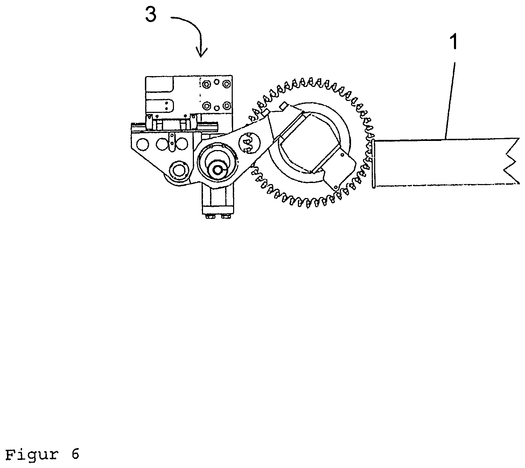

Nach Vollendung der Bearbeitung ist das Bearbeitungswerkzeug 4 an der Oberseite 1o des Werkstücks 1 ausgetreten und befindet sich in seiner höchsten Stellung (Fig. 6), bevor es wieder in die in Fig. 3 gezeigte Position zurückkehrt.

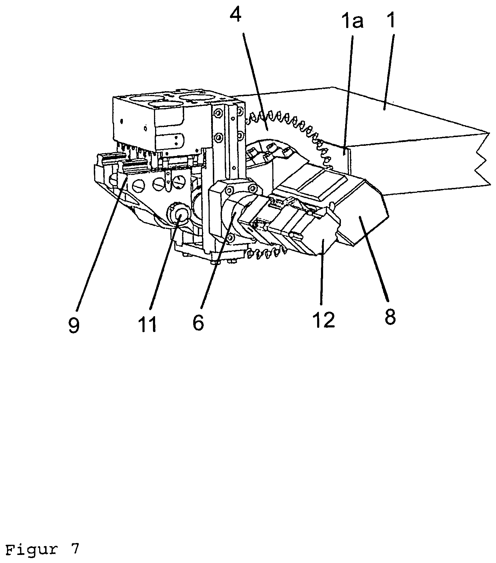

In Figur 7 ist gezeigt, dass ein weiterer Antrieb 8, der unabhängig zu dem Antrieb 12 zum Antreiben des Exzenters 5 ist, an der Bearbeitungseinrichtung 3 zum Antreiben des Bearbeitungswerkzeugs 4 vorgesehen ist.

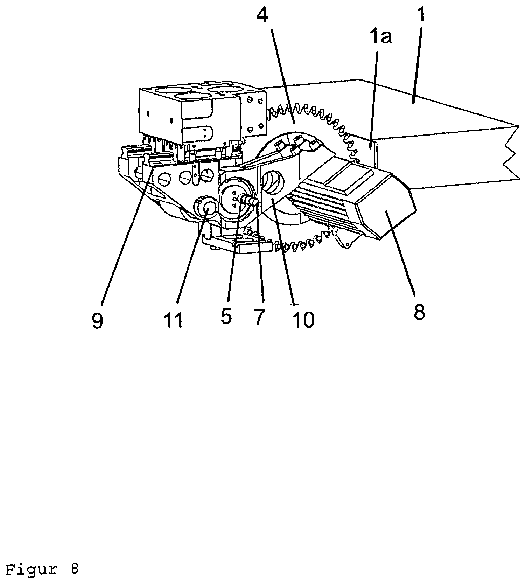

Figur 8 zeigt die Anordnung von Figur 7, bei der der Antrieb 12 nicht dargestellt ist.

## Patentansprüche

1. Bearbeitungsvorrichtung (Z) zur spanenden Bearbeitung von Werkstücken (1), die bevorzugt zumindest teilweise aus Holz, Holzwerkstoffen, Kunststoff oder dergleichen bestehen, vorzugsweise zum Kappen eines Kantenüberstands (1a) an einer Werkstückkante, die aufweist:
eine Bearbeitungseinrichtung (3) zur Aufnahme eines Bearbeitungswerkzeugs (4) zur spanenden Bearbeitung des Werkstücks durch eine Schnittbewegung mit
einem Exzenter (5) zum Führen einer Vorschubbewegung des Bearbeitungswerkzeugs in einer Vorschubebene (V) und
eine Beförderungseinrichtung (2) zum Befördern der Werkstücke und/oder der Bearbeitungseinrichtung in eine Beförderungsrichtung (R), wobei
die Beförderungsrichtung (R) winklig, senkrecht, zu der Vorschubebene (V) verläuft und
die Schnittbewegung des Bearbeitungswerkzeugs (4) in der Vorschubebene (V) oder parallel dazu verläuft, **dadurch gekennzeichnet dass** der Exzenter auf einer kegelschnittförmigen, kreisförmigen oder elliptischen, 360° Bahn verläuft.

2. Bearbeitungsvorrichtung nach Anspruch 1, bei der die Bearbeitungseinrichtung einen Antrieb (12), insbesondere einen Servomotor, Schrittmotor oder Gleichstrommotor, zum Antreiben des Exzenters (5) aufweist.

3. Bearbeitungsvorrichtung nach Anspruch 2, bei der
die Bearbeitungseinrichtung (2) einen vom Antrieb (12) des Exzenters unabhängigen Antrieb (8) zum Antreiben des Bearbeitungswerkzeugs aufweist.

4. Bearbeitungsvorrichtung nach einem der vorhergehenden Ansprüche, bei der
die Bearbeitungseinrichtung (3) in Beförderungsrichtung (R) entlang der Beförderungseinrichtung (2) verfahrbar angeordnet ist, und
ein Werkstück während der Beförderung durch die Beförderungseinrichtung bei Mitfahren der Bearbeitungseinrichtung bearbeitet werden kann.

5. Verfahren zum spanenden Bearbeiten von Werkstücken (1), die bevorzugt zumindest teilweise aus Holz, Holzwerkstoffen, Kunststoffen, Faserverbundwerkstoffen oder dergleichen bestehen, vorzugsweise zum Kappen eines Kantenüberstands an einer Werkstückkante, wobei das Verfahren die folgenden Schritte umfasst:
spanendes Bearbeiten des Werkstücks, vorzugsweise während der Beförderung des Werkstücks, durch ein Bearbeitungswerkzeug (4) einer Bearbeitungseinrichtung, vorzugsweise mittels der Bearbeitungsvorrichtung nach einem der vorhergehenden Ansprüche, durch eine Schnittbewegung und
Befördern des Werkstücks und/oder der Bearbeitungseinrichtung in einer Beförderungsrichtung (R), **dadurch gekennzeichnet, dass**
das Bearbeitungswerkzeug (4) beim Bearbeiten durch einen Exzenter (5) in einer Vorschubebene (V) winklig, insbesondere senkrecht, zur Beförderungsrichtung (R) auf einer kegelschnittförmigen 360° Bahn (B), auf einem Kreis oder einer Ellipse, zum Werkstück hin und vom Werkstück weg bewegt wird und
die Schnittbewegung des Bearbeitungswerkzeugs in der Vorschubebene (V) des Exzenters oder parallel dazu verläuft.

6. Verfahren nach Anspruch 5, bei dem
das Werkstück und/oder die Bearbeitungseinrichtung im Wesentlichen horizontal befördert wird,
das Bearbeitungswerkzeug von der Unterseite (1u) zur Oberseite (10) des zu bearbeitenden Abschnitts des Werkstücks bewegt wird und
die Schnittbewegung des Bearbeitungswerkzeugs nach unten gerichtet ist.

7. Verfahren nach Anspruch 5 oder 6, bei dem
das Bearbeitungswerkzeug (4) während des Bearbeitens auf einer elliptischen Bahn geführt wird.

8. Verfahren nach einem der Ansprüche 5 bis 7, bei dem die Bearbeitungseinrichtung zumindest während des Bearbeitens neben dem befördert werdenden Werkstück, vorzugsweise horizontal, mitfährt.

## Claims

1. Machining apparatus (Z) for the stock-removing machining of workpieces (1) at least a portion or portions of which are, preferably, of wood, engineered wood, plastics material or the like, and preferably for trimming off a projection (la) beyond an edge of a workpiece, which machining apparatus has:
a machining means (3) for receiving a machining tool (4) for the stock-removing machining of the workpiece by a cutting movement, having a cam (5) for guiding an advancing movement of the machining tool in a plane of advance (V) and
a conveying means (2) for conveying the workpieces and/or the machining means in a direction of conveying (R), with the direction of conveying (R) extending at an angle, perpendicularly to the plane of advance (V), and the cutting movement of the machining tool (4) extending in the plane of advance(V) or parallel thereto, **characterised in that** the cam follows a 360° path in the form of a conic section, a circle or an ellipse.

2. Machining apparatus according to claim 1, wherein the machining means has a drive (12), and in particular a servomotor, stepping motor or d.c. motor, to drive the cam (5) .

3. Machining apparatus according to claim 2, wherein the machining means (2) has a drive (8) for driving the machining tool which is independent of the drive (12) of the cam.

4. Machining apparatus according to one of the preceding claims, wherein the machining means (3) is arranged to be displaceable along the conveying means (2) in the direction of conveying (R), and a workpiece can be machined, during the conveying by the conveying means, as the machining means travels with the latter.

5. Method for the stock-removing machining of workpieces (1) at least a portion or portions of which are, preferably, of wood, engineered wood, plastics materials, fibre-reinforced composites or the like, and preferably for trimming off a projection beyond an edge of a workpiece, the method comprising the following steps:
stock-removing machining of the workpiece, preferably during the conveying of the workpiece, by a machining tool (4) of a machining means, preferably by means of the machining apparatus according to one of the preceding claims, by a cutting movement, and
conveying of the workpiece and/or the machining means in a direction of conveying (R), **characterised in that**, as it machines, the machining tool (4) is moved by a cam (5) towards and away from the workpiece along a 360° path (B) in the form of a conic section, along a circle or along an ellipse in a plane of advance (V) at an angle, and in particular perpendicularly, to the direction of conveying (R), and the cutting movement of the machining tool extends in the plane of advance (V) of the cam or parallel thereto.

6. Method according to claim 5, wherein the workpiece and the machining means are conveyed substantially horizontally, the machining tool is moved from the lower side (1u) to the upper side (10) of the portion of the workpiece which is being machined, and the cutting movement of the machining tool is directed downwards.

7. Method according to claim 5 or 6, wherein the machining tool (4) is guided along an elliptical path during the machining.

8. Method according to one of claims 5 to 7, wherein, at least during the machining, the machining means travels with and next to the workpiece being conveyed, preferably horizontally.

## Revendications

1. Appareil d'usinage (Z) pour l'usinage par enlèvement de copeaux de pièces (1), qui sont constituées de préférence au moins en partie de bois, de dérivés de bois, de plastique ou analogues, de préférence en vue de réduire une saillie d'arête (la) au niveau d'une arête de pièce, qui comporte :
un dispositif d'usinage (3) destiné à loger un outil d'usinage (4) destiné à l'usinage de la pièce par enlèvement de copeaux par un mouvement de coupe, avec un excentrique (5) destiné à guider un mouvement d'avance de l'outil d'usinage dans un plan d'avance (V) et
un dispositif de transport (2) destiné à transporter les pièces et/ou le dispositif d'usinage dans une direction de transport (R), dans lequel
la direction de transport (R) s'étend avec un certain angle, perpendiculaire, par rapport au plan d'avance (V) et
le mouvement de coupe de l'outil d'usinage (4) s'étend dans le plan d'avance (V) ou parallèlement à celui-ci,
**caractérisé en ce que** l'excentrique s'étend sur une trajectoire conique, circulaire ou elliptique, de 360°.

2. Appareil d'usinage selon la revendication 1, dans lequel le dispositif d'usinage comporte un dispositif d'entraînement (12), en particulier un servomoteur, un moteur pas à pas ou un moteur à courant continu, destiné à entraîner l'excentrique (5).

3. Appareil d'usinage selon la revendication 2, dans lequel le dispositif d'usinage (2) comporte un dispositif d'entraînement (8) indépendant du dispositif d'entraînement (12) de l'excentrique et destiné à entraîner l'outil d'usinage.

4. Appareil d'usinage selon l'une quelconque des revendications précédentes, dans lequel
le dispositif d'usinage (3) est agencé mobile dans la direction de transport (R) le long du dispositif de transport (2), et
une pièce peut être usinée pendant le transport par le dispositif de transport par le déplacement conjoint du dispositif d'usinage.

5. Procédé d'usinage par enlèvement de copeaux de pièces (1), qui sont constituées de préférence au moins en partie de bois, de dérivés de bois, de plastiques, de matières composites à fibres ou analogues, de préférence en vue de réduire une saillie d'arête au niveau d'une arête de pièce, lequel procédé comprend les étapes suivantes :
usinage par enlèvement de copeaux de la pièce, de préférence pendant le transport de la pièce, par un outil d'usinage (4) d'un dispositif d'usinage, de préférence au moyen de l'appareil d'usinage selon l'une quelconque des revendications précédentes, par un mouvement de coupe, et
transport de la pièce et/ou du dispositif d'usinage dans une direction de transport (R),
**caractérisé en ce que**
l'outil d'usinage (4) est déplacé lors de l'usinage par un excentrique (5) dans un plan d'avance (V) avec un certain angle, en particulier perpendiculaire, par rapport à la direction de transport (R) sur une trajectoire conique de 360° (B), sur un cercle ou une ellipse, de manière à s'approcher de la pièce et à s'éloigner de la pièce, et
le mouvement de coupe de l'outil d'usinage s'étend dans le plan d'avance (V) de l'excentrique ou parallèlement à celui-ci.

6. Procédé selon la revendication 5, dans lequel
la pièce et/ou le dispositif d'usinage sont transportés sensiblement horizontalement,
l'outil d'usinage est déplacé du dessous (1u) au-dessus (10) de la partie à usiner de la pièce et
le mouvement de coupe de l'outil d'usinage est dirigé vers le bas.

7. Procédé selon la revendication 5 ou 6, dans lequel l'outil d'usinage (4) est guidé pendant l'usinage sur une trajectoire elliptique.

8. Procédé selon l'une quelconque des revendications 5 à 7, dans lequel le dispositif d'usinage se déplace conjointement au moins pendant l'usinage à côté de la pièce transportée, de préférence horizontalement.
